# EUROPEAN PATENT SPECIFICATION

(11) **EP 2 737 203 B1**
(45) Date of publication and mention of the grant of the patent: **23.09.2015**
(21) Application number: 12768912.3
(22) Date of filing: 25.07.2012
(51) Int. Cl.: F03B 15/04, F03B 17/06

(54) **LOW PRESSURE RIVER POWER PLANT**
NIEDERDRUCK-FLUSSKRAFTWERK
CENTRALE FLUVIALE BASSE PRESSION

(30) Priority: 29.07.2011 NO 20111077
(43) Date of publication of application: 04.06.2014
(73) Proprietor: MiniHydro Norge AS, 5068 Bergen (NO)
(72) Inventor: STORBEKK, Robert, N-5054 Bergen (NO); MUNDAL, Karl-Einar, 5003 Bergen (NO)
(74) Representative: Acapo AS
(86) International application number: PCT/NO2012/000047
(87) International publication number: WO 2013/019117

(56) References cited:
- WO-A1-2010/111318
- WO-A2-03/006747
- WO-A2-2008/045574
- WO-A2-2008/146060
- US-A- 1 726 405
- US-A- 5 882 143

## Description

The present invention relates to a low pressure river power plant comprising several turbine and draft tube modules arranged in a row.

Today, water power represents the most profitable of all renewable energy sources. The technical solution has primarily been taken care of via the installation of different aggregates. The following can be mentioned as examples: PELTON turbine aggregates for large drops (high pressure) with a pressure/height (m) / throughput capacity (m3/s) combination of 100 - 1000 m / 0.02 - 4 m3/s. FRANCIS turbine aggregates (also Crossflow) for average pressures (medium pressure) with a pressure/height (m) / throughput capacity (m3/s) combination of 10 - 200 m / 0.4 - 20 m3/s. KAPLAN aggregates for lower pressures (low pressure) with a pressure/height (m) / throughput capacity (m3/s) combination of 3 - 40 m /2 - 40 m3/s.

The profitability of the installations based on the investment costs of today and the income of today (the price of electrical energy) provides a basis for investment for the KAPLAN and FRANCIS aggregates. For small power plants in the low pressure segment there are nearly no KAPLAN power plants built today as it is difficult to be profitable with this solution. This in spite of the potential for low pressure aggregates in Norway and many other countries being very large in the form of slow flowing rivers with a relatively large flow of water and low fall heights.

For today's small power plants (up to 10 MW) there are several challenges, such as, for example, specially designed turbines and generators, and also production for single orders, including extensive engineering activity. Some simplifications exist through the suppliers' experiences with many different supplies. The transformer must be adjusted to the generator output. Often, the nearest standard transformers from a supplier are used. Furthermore, an el/control/apparatus installation must be designed and put together for single order production based on the suppliers' experiences with corresponding deliveries of different dimensions and outputs. A comprehensive engineering effort is required for a power plant building large enough to completely house the electromechanical delivery.

For high pressure PELTON and intermediate pressure FRANCIS intake of inlet material and pipe line between the inlet and the power station are also included, as is extensive engineering work in this context.

From the patent literature, reference is made to, among others, WO2011/013027 A1 which describes a modular power plant to be used in a basin. The system is primarily for great heights of fall, where the plant is placed under water in a water basin and with a pipe line to each turbine. In the main, Pelton turbines are used and outlet tanks are being used.

WO2010/111318 A1 shows a prefabricated framework or floating hull with modules containing turbines and which can be moved in sluices or dams. In the front of the plant there are swinging gates in the form of doors for the regulation of the flow of water. Furthermore, there can be gliding doors (hatches) for the regulation of the flow of water through each turbine.

US 5,825,094 A shows a module based and moveable power plant for placing in a spillway dam, where several impellers are connected to each generator via a transmission. A hatch for closing of the draft tube to each turbine impeller is described. Furthermore, a valve is described for control of the inlet to each module.

GB 177803 A shows a solution for control of load variations for several turbines, where a group of turbines delivers a basic load while another group of turbines delivers a top load. At load variation corresponding to one single turbine, one single full load turbine is started/stopped.

Of other general background prior art, reference is also made to US 6,281,597 B1, US 2004/0222641 A1, US 7,372,172 B2 and DE202009000184 U1.

Reference is also made to WO 2003/006747, WO 2008/146060 A2, WO 2008/045574 A2, US 1,726,405 A, and US 5,882,143 A.

Power plants based on the present invention with standardised low pressure aggregates can, for example, comprise main components, with a turbine module and a draft tube module, that can encompass mass-produced prefabricated concrete elements, and which leads to limited engineering activities.

Each module can represent a power plant segment of, for example, 50 - 150 kVA, dependent on the height of the turbine module, which can be 2 - 5 m. The regulation of the power plant can be based on each module being either on (producing electricity) or off, dependent on the available amount of water. Costly solutions such as twistable impellers/propeller blades and a guiding apparatus that can be regulated are thereby avoided. Also avoided is cavitation on the impeller blade through correctly adjusted impeller design for constant flow of water and a constant pressure.

An advantage with the present invention is, among other things, that the engineering activities represent a one-off cost, i.e. limited to engineering activity associated with the single delivery. Standardising and production of components for delivery of large quantities (mass production) provide a basis for large cost savings. Optimising the choice of materials provides a basis for cost savings without being at the expense of a requirement for minimum life expectancy for the delivery. Simple maintenance combined with simple replacing of cheap parts that wear out provide a basis for cost savings. Prefabrication of modules for delivery of completely equipped modules on vehicles to the power plant provides a basis for cost savings particularly in connection with installation at the plant. Considerably smaller power plant buildings represent lower costs, and limited engineering works represents lower costs.

A barrier that can be regulated and a combination of several modules in a row represent additional costs which only limits a further total cost saving. The barrier will regardless be part of a traditional KAPLAN aggregate. The arrangement for a course grate, grate cleaning and a fish ladder can be part of any low pressure aggregate solution for a river power plant.

It is an object of the present invention to provide a new module based power plant, preferably to be placed in rivers, that provides considerably reduced installation costs and operating costs and which delivers approximately as much, or more, power than corresponding known solutions.

The above mentioned objects are achieved with a low pressure river power plant as given in independent claim 1, comprising several prefabricated turbine and draft tube modules arranged in a row, where a number of barriers, that can be raised and lowered, are arranged side-by-side upstream of the modules and arranged to control the amount of water via an inlet channel to the turbine and draft tube modules, and that each turbine and draft tube module is equipped for selective closing of the respective module.

Alternative embodiments are given in the dependent claims.

A number of prefabricated and internally open inlet modules can be arranged adjoining a respective turbine and draft tube module. Furthermore, the inlet channel can be arranged between said barriers and the inlet modules.

The inlet channel can be equipped with a grate that can be closed.

Each turbine and draft tube module preferably comprises a turbine with an impeller mounted on a vertical shaft, and where the shaft is connected with a generator arranged at the top of the module. A transmission can be arranged between the shaft and the generator, where the latter can be arranged in a horizontal or a vertical position.

Furthermore, the turbine and draft tube module can be composed of an upper turbine module and a lower draft tube module.

The turbine and draft tube module can comprise a hatch against respective adjoining inlet modules, arranged to close or open for through-flow of water, and thus production of power.

A guiding funnel can be arranged about, at least, the lower part of the shaft with the impeller. Alternatively, the guiding funnel can extend to the hatch.

At least the turbine and draft tube modules can be manufactured from prefabricated concrete elements, equipped as described above. The other modules are also preferably prefabricated.

Said barrier can be shaped as a hatch that can be raised and lowered, comprising two plate parts that are articulated and anchored to an underlying base. Furthermore, the base can be equipped with a cylinder arranged to raise and lower the plate parts, which contribute to raising and lowering the barrier.

The power plant can also comprise a control and apparatus installation in a plant building and which is equipped to regulate and control the components that are part of the power plant.

The control and apparatus installation is preferably arranged to distribute the electricity that is produced in the power plant, and also to dump excess or overproduced electricity.

The invention shall now be described in more detail with reference to the enclosed figures, in which:
Figure 1 shows a low pressure river power plant according to the invention.
Figure 2 shows a section of a barrier and inlet grate, in an upper part of the power plant shown in figure 1.
Figure 3 shows barrier modules that are incorporated into the power plant shown in figure 1 in different positions.
Figures 4-6 show a single barrier module in different positions.
Figure 7 shows turbine and draft tube modules in a lower part of the power plant shown in figure 1.

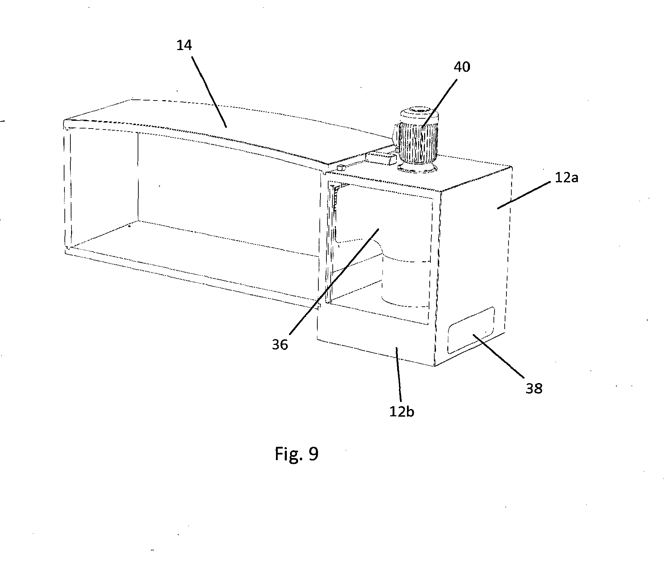

Figures 8-9 show in more detail a turbine and draft tube module according to the invention.

As the figures show the present invention comprises a low pressure river power plant 10 in the form of a module based system, preferably composed of prefabricated sets of standardised modules of equal shape and size. All, or parts, of the power plant can be made of such standardised modules. The power plant according to the invention can comprise a series of identical turbine modules and identical draft tube modules. The modules are preferably prefabricated in concrete and substances can be added to provide the smoothest possible surface against the flow of water.

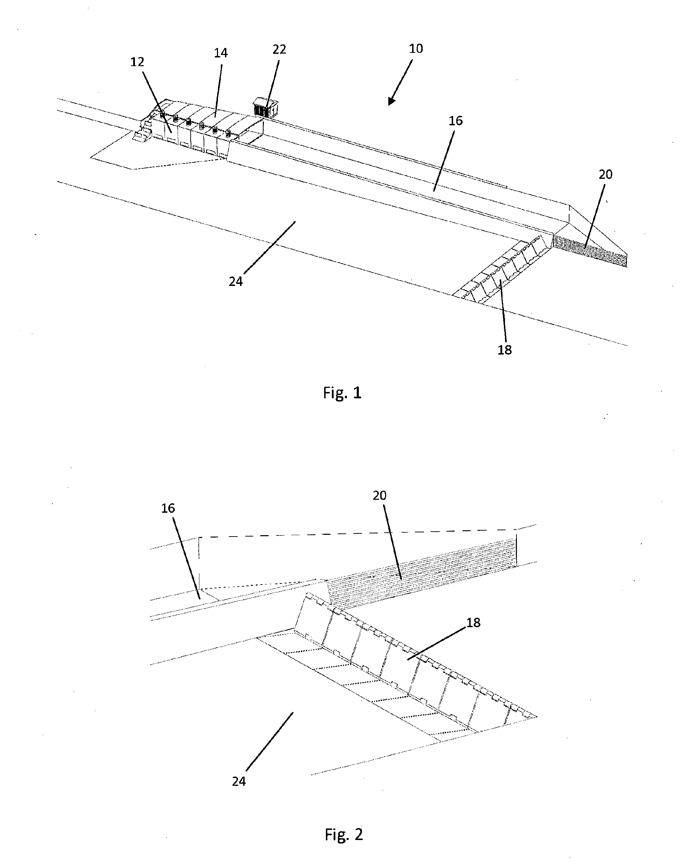

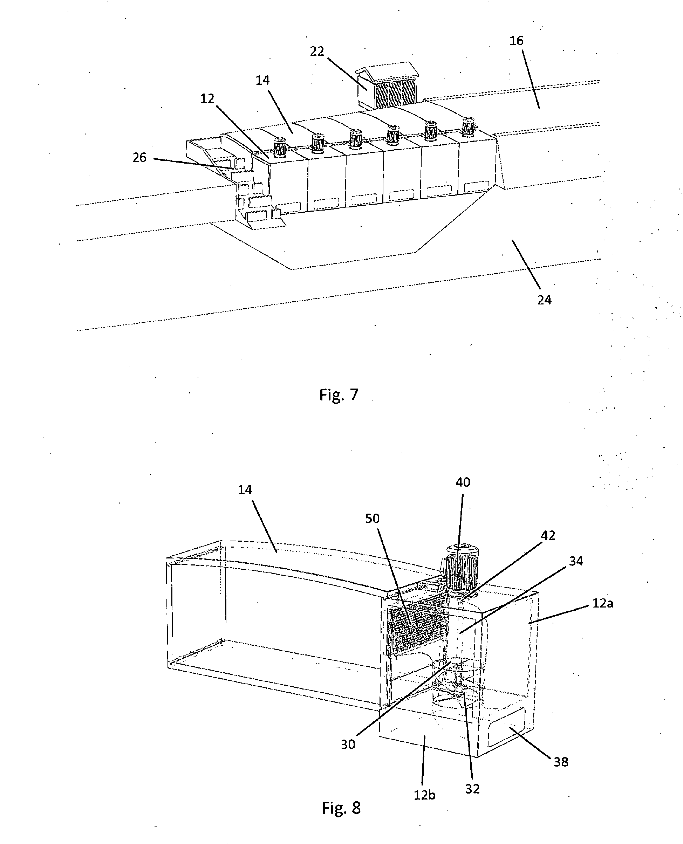

Several turbine and draft tube modules 12 are preferably placed in a row adjoining, or in, a river. In figures 1 and 7, six modules are shown that are placed in a row, but there can, of course, be more or fewer modules. Adjoining, or integrated with the turbine and draft tube modules 12, a number of inlet modules 14 are placed to lead water from a river 24 and into the respective turbine and draft tube module 12. Upstream of the turbine and draft tube modules 12 an inlet channel 16 can extend out to lead water to the inlet modules 14. The inlet modules 14 can be omitted in that the inlet channel 16 runs directly towards the turbine and draft tube modules. A coarse grate 20 can be arranged in the inlet channel 16 and which can be equipped with one or more plates (not shown) to close the inflow of water in the inlet channel 16, for example, in connection with maintenance of the power plant or in case of flooding.

Furthermore, upstream of the turbine and draft tube modules 12 a hatch or guiding edge is arranged in the form of a number of barriers 18 to guide water to the turbine and draft tube modules 12, preferably via the inlet channel 16. Said barriers 18 can be arranged next to each other in the river 24, where each barrier comprises, for example, two plate parts 18a, 18b that can be raised or lowered and which are mounted to a base 18c. As shown in figure 2, many barriers can be placed next to each other, in the example shown, eight barriers, and these can then simply be adapted to the width of the river. It is, of course, possible that the barrier can be made in one piece that covers about the whole width of the river, but this leads to more comprehensive engineering work and installation costs. By prefabricating the barrier modules 18 in sensible widths, it will be simple to set out a number of barriers 18 to cover the whole width of the river if this is desired.

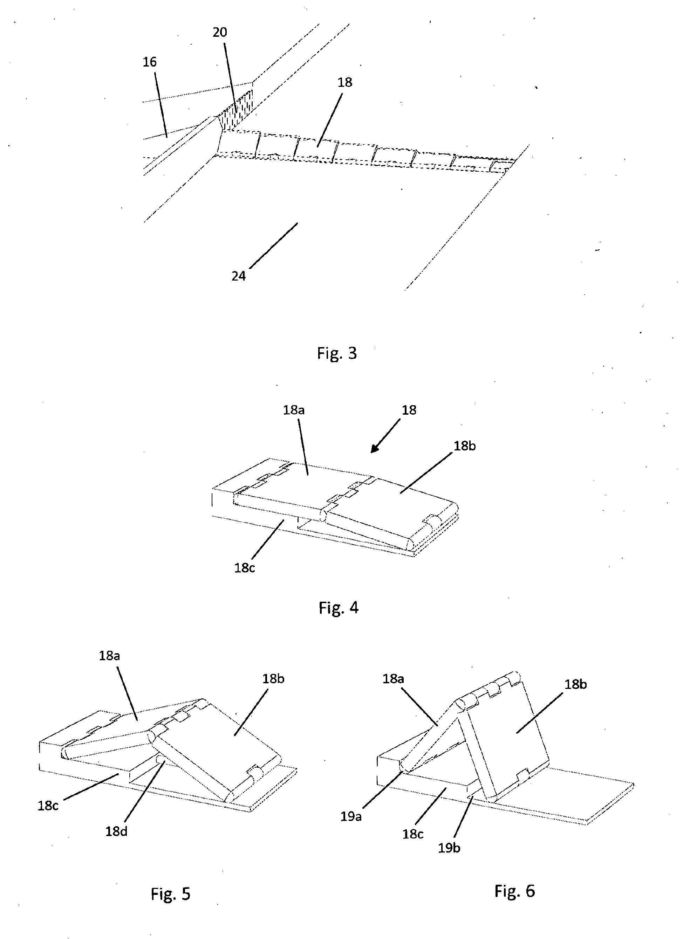

The barrier modules 18 can, as shown in figure 3, be individually raised and lowered so that only a required part of the river water is guided into the inlet channel 16. This can be used for the regulation of the power production and can also be used to let water flow past at high levels of water in the river. The plate parts 18a, 18b can be articulated and can, with the help of a cylinder 18d or the like, be moved from a lying position as shown in figure 4 to a raised position as shown in figure 6. Furthermore, the plate parts can be in any intermediate position, for example, as shown in figure 5. The base 18c can be appropriately formed in several thicknesses in the longitudinal direction so that the first plate part 18a rests against a first edge 19a and the second plate part 18b can, when it is raised, rest against a second edge 19b. This means that the plate parts 18a, 18b will be better able to withstand the forces arising from the flow of water in the river. Furthermore, the barrier modules can be controlled from a control and apparatus installation 22 in a plant building.

There may be a salmon ladder 26 downstream of the turbine and draft tube modules 12, but placed in a different way than the figure shows so that the fish do not need to swim through the modules or pass the grate in the inlet channel.

The turbine and draft tube module 12 can be assembled from an upper turbine module 12a and a lower draft tube module 12b. During assembly, the draft tube module 12b can be placed first on underlying mass whereupon the turbine module 12a is fastened on the top of the draft tube module. Furthermore, components that are incorporated can, for example, be put together at the factory before delivery to the power plant. Correspondingly, this can apply to all or parts of the other modules that are part of the power plant 10.

The turbine and draft tube module 12 is equipped with a turbine 30, for example, a propeller turbine, and has an impeller 32 that can be manufactured from a composite material and which is mounted onto the lower part of a vertical shaft 34 (manufactured from a composite and/or stainless material) together with a lower radial bearing (which can also be a composite wear part). The shaft 34 is mounted vertically in the turbine model 12a and extends up through an opening in an upper part of the turbine module. The upper part can be a concrete lid that is screwed on. The shaft 34 is anchored in an upper bearing that is an axial/radial bearing. The bearing housing of the upper bearing is anchored in a base on the concrete lid. Furthermore, a transmission 42 is arranged between the shaft 34 and a generator 40, also anchored, for example, on the lid. The generator 40 can be arranged horizontally or vertically and the transmission will be adjusted correspondingly. It is appropriate with a transmission because of varying rotation speeds between the turbine shaft and the generator, but the transmission can be omitted if desired, particularly when the speed of revolution of the generator can be adjusted to the same speed of revolution as the runner-blade wheel.

In the upper part of the turbine module an electromotor (not shown) can be arranged in addition to the generator 40 for operation of an opening and closing hatch 50 that is part of the side wall of the module out towards the water inlet modules 14 in the flow of water in to the module system. The hatch 50 can be equipped with a fine grate, which simply can be cleaned manually and cleaned whenever required. Alternatively, the inlet modules can be equipped with the hatch 50. A guiding funnel 36 can be arranged between the hatch 50 and about the shaft 34 with the impeller 32. Alternatively, the guiding funnel can extend to the hatch.

A water-tight, solid cover (not shown) can be fitted over the equipment that is mounted on the concrete lid. The cover can be hinged for opening and closing. Furthermore, the cover ought to be water-tight in a flood situation.

The draft tube module can comprise a draft tube element part (plastic or stainless steel) moulded into the upper part of the module.

Each turbine module is designed for a given amount of water/through put capacity. For a production of 50 kVA (from a module) the through put capacity will be, for example, 3 m3/s and the height of the pressure 2 m.

Dependent on the amount of available water, the turbine modules will be ON or OFF, regulated by the control and apparatus installation 22 in the plant building. The control installation and apparatus installation/high voltage installation and transformer will also be placed here.

## Claims

1. Low pressure river power plant (10), comprising:
- several prefabricated turbine and draft tube modules (12) arranged in a row, and wherein each turbine and draft tube modules (12) are equipped for selective closing of respective modules (12), and
- a number of barriers (18) arranged side-by-side upstream of the modules (12) and arranged to control the amount of water via an inlet channel (16) to the turbine and draft tube modules (12), **characterised in that**
- each barrier (18) is prefabricated and formed as a hatch, comprising two plate parts (18a, 18b) that are articulated connected to each other and anchored to an underlying base (18c) by means of a further articulation (19a) between one of the plate parts (18a) and the underlying base (18c) and located on the opposite edge of said one of the plate parts (18a) from the articulation with the other plate part (18b), said base (18c) being equipped with a cylinder (18d) arranged to raise and lower the plate parts (18a, 18b) from a lying position to a raised position.

2. River power plant according to claim 1, in which a number of prefabricated and internally open inlet modules (14) are arranged adjoining a respective turbine and draft tube module (12).

3. River power plant according to claim 2, in which the inlet channel (16) is arranged between said barriers (18) and the inlet modules (14).

4. River power plant according to claim 1, in which the inlet channel (16) is equipped with a closable grate (20).

5. River power plant according to claim 1, in which each turbine and draft tube module (12) comprises a turbine (30) with an impeller (32) mounted onto a vertical shaft (34), and where the shaft (34) is connected with a generator (40) arranged at the top of the module (12).

6. River power plant according to claim 5, in which a transmission (42) is arranged between the shaft (34) and the generator (40).

7. River power plant according to claim 1, in which the turbine and draft tube module (12) is composed of an upper turbine module (12a) and a lower draft tube module (12b).

8. River power plant according to claim 1, in which the turbine and draft tube module (12) comprises a hatch (50) arranged to close or open for through-flow of water.

9. River power plant according to claim 5, in which a guiding funnel (36) is placed around, at least, parts of the shaft (34) with the impeller (32).

10. River power plant according to claims 8 and 9, in which the guiding funnel (36) extends to the hatch (50).

11. River power plant according to claims 1-10, in which, at least, the turbine and draft tube modules (12) are manufactured from prefabricated concrete elements, equipped as given in one or more of claims 1-10.

12. River power plant according to claims 1-11, in which the power plant comprises a control and apparatus installation (22) equipped to regulate and control the components given in one or more of claims 1-11.

13. River power plant according to claim 12, in which the control and apparatus installation (22) is arranged to distribute the electricity that is produced in the power plant (10), and also to dump excess, or overproduced, electricity.

## Patentansprüche

1. Niederdruckflusskraftwerk (10), umfassend:
- mehrere vorgefertigte Turbinen- und Saugrohrmodule (12), welche in einer Reihe angeordnet sind, und wobei jedes Turbinen- und Saugrohrmodul (12) ausgestattet ist für wahlweises Schließen des entsprechenden Moduls (12), und
- mehrere Barrieren (18), die nebeneinander stromauf der Module (12) angeordnet sind und die eingerichtet sind zur Steuerung der Menge von Wasser über einen Einlasskanal (16) zu den Turbinen- und Saugrohrmodulen (12), **dadurch gekennzeichnet, dass**
- jede Barriere (18) vorgefertigt ist und geformt ist als eine Klappe, umfassend zwei Plattenteile (18a, 18b), welche gelenkig miteinander verbunden sind und verankert sind an einer darunterliegenden Basis (18c) vermittels eines weiteren Gelenks (19a) zwischen einem der Plattenteile (18a) und der darunterliegenden Basis (18c) und angeordnet ist an der gegenüberliegenden Kante des einen der Plattenteile (18a) von dem Gelenk mit dem anderen Plattenteil (18b), wobei besagte Basis (18c) ausgestattet ist mit einem Zylinder (18d), welcher so angeordnet ist, dass dieser die Plattenteile (18a, 18b) von einer liegenden Position in eine angehobene Position heben und senken kann.

2. Flusskraftwerk nach Anspruch 1, bei dem eine Anzahl an vorgefertigten und intern offenen Einlassmodulen (14) angrenzend an ein entsprechendes Turbinen- und Saugrohrmodul (12) angeordnet sind.

3. Flusskraftwerk nach Anspruch 2, bei dem der Einlasskanal (16) zwischen besagten Sperren (18) und den Einlassmodulen (14) angeordnet ist.

4. Flusskraftwerk nach Anspruch 1, bei dem der Einlasskanal (16) ausgestattet ist mit einem verschließbaren Gitter (20).

5. Flusskraftwerk nach Anspruch 1, bei dem jedes Turbinen- und Saugrohrmodul (12) eine Turbine (30) mit einem Impeller (32), der angebracht ist an einer vertikalen Welle (34), umfasst und wobei die Welle (34) verbunden ist mit einem Generator (40), der an der Oberseite des Moduls (12) angeordnet ist.

6. Flusskraftwerk nach Anspruch 5, bei dem ein Getriebe (42) zwischen der Welle (34) und dem Generator (40) angeordnet ist.

7. Flusskraftwerk nach Anspruch 1, bei dem das Turbinen- und Saugrohrmodul (12) zusammengesetzt ist aus einem oberen Turbinenmodul (12a) und einem unteren Saugrohrmodul (12b).

8. Flusskraftwerk nach Anspruch 1, bei dem das Turbinen- und Saugrohrmodul (12) eine Klappe (50) umfasst, welche eingerichtet ist, sich für einen Durchfluss von Wasser zu öffnen oder zu schließen.

9. Flusskraftwerk nach Anspruch 5, bei dem ein Führungstrichter (36) wenigstens um Teile der Welle (34) mit dem Impeller (32) herum angeordnet ist.

10. Flusskraftwerk nach den Ansprüchen 8 und 9, in dem der Führungstrichter (36) sich auf die Klappe (50) zu erstreckt.

11. Flusskraftwerk nach den Ansprüchen 1 bis 10, in dem wenigstens die Turbinen- und Saugrohrmodule (12) hergestellt sind aus vorgefertigten Betonelementen, welche ausgestattet sind wie in einem oder mehreren der Ansprüche 1 bis 10 angegeben.

12. Flusskraftwerk nach den Ansprüchen 1 bis 11, in dem das Kraftwerk eine Steuerungs- und Geräteinstallation (22) ausgestattet zur Regelung und Steuerung der Komponenten wie angegeben in einem oder mehreren der Ansprüche 1 bis 11 umfasst.

13. Flusskraftwerk nach Anspruch 12, in dem die Steuerungs- und Geräteinstallation (22) eingerichtet ist, die Elektrizität, welche in dem Kraftwerk (10) produziert wird, zu verteilen und darüber hinaus überschüssige oder überproduzierte Elektrizität zu entsorgen.

## Revendications

1. Centrale fluviale basse pression (10), comprenant :
- plusieurs modules de turbine et de tube d'aspiration préfabriqués (12) agencés en ligne, et dans laquelle chaque module de turbine et de tube d'aspiration (12) est équipé pour la fermeture sélective de modules respectifs (12), et
- un certain nombre de barrières (18) agencées côte à côte en amont des modules (12) et agencées pour réguler la quantité d'eau traversant un canal d'admission (16) jusqu'aux modules de turbine et de tube d'aspiration (12), **caractérisée en ce que**
- chaque barrière (18) est préfabriquée et formée comme une trappe, comprenant deux parties de plaque (18a, 18b) qui sont articulées reliées l'une à l'autre et ancrées à une base sous-jacente (18c) au moyen d'une autre articulation (19a) entre l'une des parties de plaque (18a) et la base sous-jacente (18c) et situées sur le bord opposé de ladite une des parties de plaque (18a) par rapport à l'articulation avec l'autre partie de plaque (18b), ladite base (18c) étant équipée d'un cylindre (18d) agencé pour lever et abaisser les parties de plaque (18a, 18b) d'une position couchée à une position relevée.

2. Centrale fluviale selon la revendication 1, dans laquelle un certain nombre de modules d'admission préfabriqués et à ouverture interne (14) sont agencés de manière attenante à un module de turbine et de tube d'aspiration (12) respectif.

3. Centrale fluviale selon la revendication 2, dans laquelle le canal d'admission (16) est agencé entre lesdites barrières (18) et les modules d'admission (14).

4. Centrale fluviale selon la revendication 1, dans laquelle le canal d'admission (16) est équipé d'une grille pouvant être fermée (20).

5. Centrale fluviale selon la revendication 1, dans laquelle chaque module de turbine et de tube d'aspiration (12) comprend une turbine (30) avec une pale (32) montée sur un arbre vertical (34), et où l'arbre (34) est relié à une génératrice (40) agencée au sommet du module (12).

6. Centrale fluviale selon la revendication 5, dans laquelle une transmission (42) est agencée entre l'arbre (34) et la génératrice (40).

7. Centrale fluviale selon la revendication 1, dans laquelle le module de turbine et de tube d'aspiration (12) est composé d'un module de turbine supérieur (12a) et d'un module de tube d'aspiration inférieur (12b).

8. Centrale fluviale selon la revendication 1, dans laquelle le module de turbine et de tube d'aspiration (12) comprend une trappe (50) agencée pour se fermer ou s'ouvrir pour l'écoulement de l'eau.

9. Centrale fluviale selon la revendication 5, dans laquelle un entonnoir de guidage (36) est placé autour, au moins, de parties de l'arbre (34) avec la pale (32).

10. Centrale fluviale selon les revendications 8 et 9, dans laquelle l'entonnoir de guidage (36) s'étend jusqu'à la trappe (50).

11. Centrale fluviale selon les revendications 1 à 10, dans laquelle, au moins, les modules de turbine et de tube d'aspiration (12) sont fabriqués à partir d'éléments en béton préfabriqués, équipés comme indiqué dans une ou plusieurs des revendications 1 à 10.

12. Centrale fluviale selon les revendications 1 à 11, dans laquelle la centrale comprend une installation d'appareils et de commande (22) équipée pour réguler et commander les composants indiqués dans l'une ou plusieurs des revendications 1 à 11.

13. Centrale fluviale selon la revendication 12, dans laquelle l'installation d'appareils et de commande (22) est agencée pour distribuer l'électricité qui est produite dans la centrale (10), et également pour décharger le surplus ou l'excédent de production d'électricité.
